# EUROPEAN PATENT APPLICATION

(11) **EP 1 463 091 A2**
(43) Date of publication of application: **29.09.2004**
(21) Application number: 04075462.4
(22) Date of filing: 16.02.2004
(51) Int. Cl.: H01J 61/12, C02F 1/32, H01J 61/82

(54) **UV-optimised discharge lamp with electrodes**

(30) Priority: 17.02.2003 DK 200300227
(71) Applicant: KAAS, Povl, 7400 Herning (DK); Ebert, Bert Harst, 10247 Berlin (DE)
(72) Inventor: KAAS, Povl, 7400 Herning (DK); Ebert, Bert Harst, 10247 Berlin (DE)
(74) Representative: Schmidt, Jens Joergen

(57) **Abstract**

A discharge lamo (1) with electrodes (3,4) is disclosed where the discharge vessel (2) contains a radiating component consisting of non-metals and/or semi-metals selected from among the elements arsenic, phosphorus, sulphur, selenium and tellurium or a combination these.

These element however very easily create compounds with the electrode material, which are deposited as reaction products on the internal surface of the discharge vessel (2), resulting in a serioulsly depleted UV radiation and overheating of the lamp (1). This problem is solved by filling the discharge vessel (2) further with one or more halogens, preferably chlorine, bromine or iodine or a mixture thereof, whereby the formation of compounds of the elements and the electrode metal and also blackening on the internal surface of the discharge vessel (2) are avoided, and any possibly created compounds are broken down so that the element or element remain liberated in non-molecular form, thus being available for the production of UV radiation in the spectral region below 300 nm.

## Description

The present invention relates to a discharge lamp with electrodes where the discharge vessel contains a radiation component, non-metals and/or half-metals selected from among the elements arsenic, phosphorus, sulphur, selenium and tellurium or a combination of these, together with one or more halogens in such a way that the radiation from the discharge vessel mainly is emitted by the radiation emitting component, whereby the distribution of spectral energy in the wavelength area below 300 nm is increased.

### BACKGROUND OF THE INVENTION

In many processes UV radiation based on mercury UV lamps is employed for the treatment of drinking, domestic and waste water. This form of water treatment is becoming more and more widespread because of principally determined advantages.

Low pressure mercury lamps with monochromatic UV radiation are employed in many water treatment systems. Their advantage lies in their high radiative effect at 253.7 nm. Radiation at this wavelength has proved suitable for inactivating micro organisms. The disadvantages with low pressure mercury lamps are their great length requiring high construction costs together with the fact that they almost exclusively emit UV energy at about 253.7 nm and 184.9 nm. Low pressure mercury lamps are therefore unsuitable for processes requiring other wavelengths.

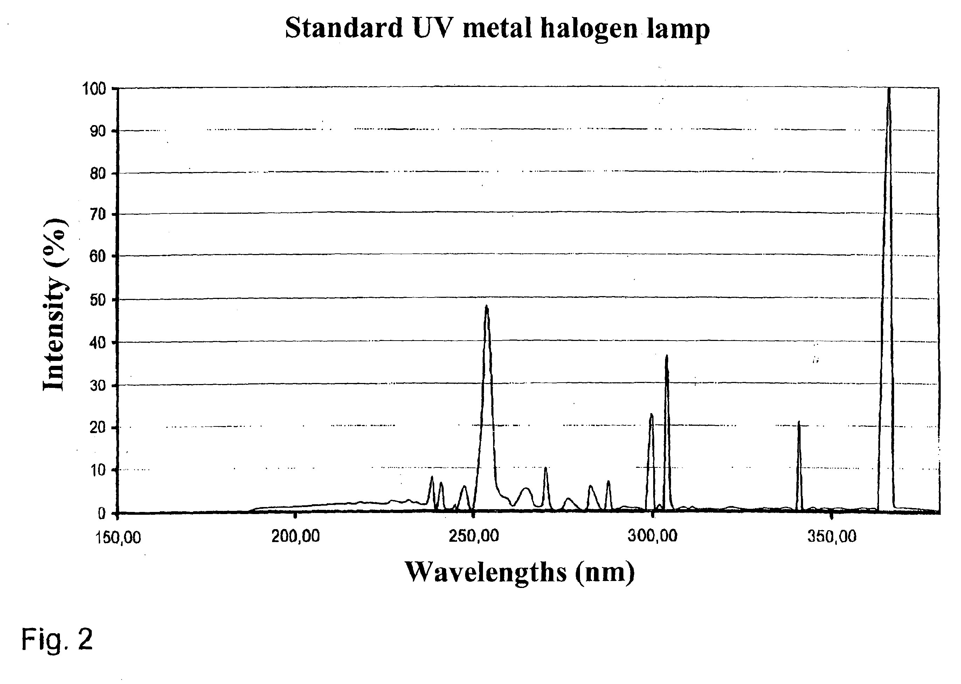

High pressure mercury lamps fig. 2 (also known as medium pressure lamps) with polychromatic UV radiation are more suitable for reduction processes in connection with photochemical purification of water than low pressure mercury lamps due to their almost continuous spectrum from 180 nm up to about 366 nm together with the widely distributed lines in the mercury spectrum. For these reasons more and more areas of utilization of high pressure mercury lamps are being seen. There remain however a drawback that the mercury spectrum can only be influenced to a small extent and that there is a certain lack of radiation energy in the areas of the spectrum below 300 nm which are important for water treatment. In US 4 792 407 a method of treating water is described which however never worked properly due to the lack of polychromatic UV energy with increased energy in the spectrum region below 300 nm. This problem, namely that of too little influence on the mercury spectrum is partially solved with a filling of metal halogenides, which gives many advantages in the spectral area above 260 nm (metal halogen vapour lamps). In the spectral area below 300 nm and down to 150 nm in the vacuum UV region the addition of metal halogenides gives no or only few advantages. This area is however of particularly great interest as regards photochemical water treatment.

In US 5 404 076, 4 April 1995, "Lamp including sulphur" as well as in US 5 834 895, 10 Nov. 1998, "Visible Lamp including selenium" is disclosed the use of sulphur and selenium, respectively, as primary filling together with inert gases for the production of visible light. This visible light is produced by use of the molecular spectra from sulphur and selenium in the area 350 nm to 750 nm with a partial pressure of above 1 bar whilst the UV radiation is suppressed. In order to be able to use the said elements in lamps with electrodes, these must be protected from chemical reaction with the filling elements, for example by making them of cermet (ceramic metal which is sintered together), of carbon or by giving them a protective coating of for example platinum. The electrodes described have a very short life expectancy and are expensive and complicated to produce compared to wolfram electrodes. Another demonstrated solution is to avoid the use of electrodes, which project into the discharge vessel and instead provide an external microwave source in order to supply the gas within the discharge vessel of the lamp with the required energy.

From EP-B1-0 670 588, 2 March 1994, "Metal halide lamp" as well as US 5 461 281 means are known for reducing blackening of the internal surface of the discharge vessel in a metal halide lamp with electrodes for use for illumination with visible light (400 nm-800 nm). Blackening of the internal surface of such lamps occurs when wolfram from the electrodes is liberated during operation and combines with silicon dioxide (SiO₂) in the material of the discharge vessel. The discharge vessel thus becomes opaque and the life span of the lamp is shortened. Internal blackening of the discharge vessel is avoided by means of the known halogen cycle where halogens combine with the liberated wolfram and thus prevent or reduce blackening.

UV discharge lamps with UV radiation energy are primarily employed in connection with photochemical processes including those for the inactivation of microorganisms and the decomposition of various unwanted substances, for example hormones and hormone-like materials. For this purpose it is an advantage when a greater amount of energy can be produced in the spectral region from 150 nm, the vacuum UV area, and up to 300 nm.

It is therefore an object of the invention to realise a discharge lamp with electrodes which produces significantly more energy in the spectral area below 300 nm, preferably from 150 nm, the vacuum UV area, and up to 300 nm than the previously known mercury high pressure lamps.

It is advantageous to employ discharge lamps with electrodes rather than those using a microwave source, since the said source is a both expensive and sensitive element which is easily damaged, thereby reducing the utility of the lamp, whilst the consumption of energy is much more economic using electrodes. Microwave sources take up much space; the problem is that each lamp must have its own microwave source device.

The object is fulfilled with the present invention with a discharge lamp where the discharge vessel contains an electromagnetic radiation emitting component consisting of one or more elements selected from the non-metals and half-metals arsenic, phosphorus, sulphur, selenium and tellurium, preferably a combination of two or more of these elements. The most important atomic spectral lines or emission lines of these elements lie within the above mentioned area, which means that the radiation energy emitted by the elements in non-molecular form is mainly close to these atomic emission lines, that is to say in the same wavelength area. The said emission lines are as follows:

| | |
|---|---|
| Arsenic | 189.05 / 228.81 / 234.98 / 278.02 / 286.05 nm |
| Phosphorus | 253.57 / 255.49 nm |
| Sulphur | 182.05/182.64 nm |
| Selenium | 196.02 nm |
| Telluriumz | 238.33 / 238.55 / 253.07 / 276.97 nm |

These elements however combine very easily with the electrode material, typically wolfram, and create compounds with it, for example WA_{S2}, WP, WP₂, WS₂, W₂P, WS₃, WSₑ₂ and WTₑ₂, which are thereafter deposited as reaction products on the internal surface of the discharge vessel whose preferred material is quartz glass. These deposits result in a seriously depleted UV radiation from the discharge vessel and consequently an overheating of the UV discharge lamp. The life span of the UV discharge lamp is hereby drastically reduced to less than 10 minutes of operation time. Actual corrosion of the electrodes can also occur. This problem has surprisingly been solved by filling the discharge vessel further with one or more halogens, preferably chlorine, bromine or iodine or a mixture thereof, whereby the formation of compounds of the elements and the electrode metal and also blackening on the internal surface of the discharge vessel are avoided, and any possibly created said compounds are broken down so that the element or elements remain liberated in non-molecular form, thus being available for the production of UV radiation in the area below 300 nm.

According to the invention the problem is counteracted, viz. the creation of reaction products of the combined lamp filling elements and the electrode material in a UV discharge lamp with electrodes by a further introduction of halogens, preferably the halogens chlorine, bromine or iodine or a mixture of these in order to break down the said reaction products whilst they are being created. Deterioration of the electrode leaders/electrodes together with deposits on the internal surface of the discharge vessel are thereby prevented and simultaneously the electrode material is transported back to the electrodes and deposited here (halogen cycle). Non-metals and/or half-metals are liberated by this reaction and are again available for gas discharge resulting in an increase in the radiation energy of the lamp below 300 nm.

This invention has made it possible to obtain the required spectrum by using one or more of the above mentioned elements as emitters of radiation and with the addition of one or more halogens in adequate amount whereby the radiation emitting component remain in the correct radiation emitting form. At the same time the halogen or halogens hinder blackening of the discharge vessel and corrosion of the electrodes.

### BRIEF DESCRIPTION OF THE INVENTION

The present invention relates to a discharge lamp comprising a discharge vessel made of an electromagnetic radiation transmitting material, preferable quartz glass, and two electrodes extending into the discharge vessel which contains an electromagnetic radiation emitting component consisting of one or more elements selected among arsenic, phosphorus, sulphur, selenium and tellurium, preferable a combination of two or more of the said elements, where the discharge vessel further contains one or more halogens so that the radiation from the lamp during normal operation is mainly emitted by the electromagnetic radiation emitting component.

At the inertial filling of the discharge vessel of the lamp, the elements may be introduced as various chemical compounds, which when the lamp is turned on the first time and when the operation temperature is reached, will decompose and release the said elements.

The electrodes consist preferably of a high temperature metal, i.e. metal with a high melting point, where the preferred material is wolfram without additives or with additives, which are normally used in discharge lamps, for example thorium oxide, yttrium oxide or compounds of rare earths.

It is preferred that the electromagnetic radiation emitting component during normal operation of the discharge lamp mainly exists in a non-molecular form in the plasma, that is to say as atoms or to a lesser extent as ions. The radiation energy emitted by the lamp lies therefore close to the atomic emission lines of the electromagnetic radiation emitting component, i.e. in the same wavelength area.

The component emitting electromagnetic radiation is during operation mostly to be found in a non-molecular form, which gives the required spectral distribution of the radiant energy produced, since the radiation from components in molecular form is more complex and gives a more continuous distribution with longer wavelengths as seen for example in US 5 834 895 and US 404 076 where the spectra are shown for lamps emitting visible light from molecular selenium and molecular sulphur respectively. The component exists during operation mainly in gaseous form and the concentration of the component in the plasma arc between the electrodes is basically constant during the whole life span of the lamp.

The UV radiant energy emitted by the lamp lies mainly close to the atomic emission lines of the electromagnetic radiation emitting component, that is to say the energy is given off in and close to the component's atomic spectra, which for each element contain several characteristic spectral lines.

The energy from the electromagnetic radiation exists in a preferred embodiment substantially as polychromatic radiation with a wavelength below 300 nm with its lower limit corresponding to the transmission of the discharge vessel, meaning that more than 50 % of the energy lies in this range.

During normal operation of the discharge lamp, i.e. where the discharge vessel has its operation temperature, the surface temperature of the discharge vessel is typically 800 - 1200 °C. The concentration of the said electromagnetic radiation emitting component in the discharge vessel is advantageously at least 1 nmol/cm³, whereas a concentration of at least 50 nmol/cm³ is preferable and a concentration of at least 100 nmol/cm³ is most preferred.

The upper limit for the content of said component emitting electromagnetic radiation may for a preferred embodiment be defined in that the total partial pressure of the said electromagnetic radiation emitting component under normal operation does not exceed 700 torr (93.3 kPa), and the said total partial pressure should preferably not exceed 100 torr (13.3 kPa).

By providing a lamp with a content of the said electromagnetic radiation emitting component in the discharge vessel within the designated limits, significant increases of the spectral energy distribution in the mentioned wavelength areas are attained, since the component mainly will exist in atomic or ionised form as a plasma arc between the electrodes.

When the partial pressure in the discharge lamp with electrodes is so low, UV radiation is emitted to a great extent in the spectral area below 300 nm and the creation of electromagnetic radiation energy above 350 nm is hindered or limited, whereby even higher levels of UV radiant energy are created at wavelengths below 300 nm.

The halogen or halogens employed include preferably bromine, chlorine or iodine or any combination of these. The concentration of said halogen or halogens amounts in one embodiment in order to attain the desired effect amount to at least 1 nmol/cm³ of the total volume of the discharge vessel, whereas a concentration of at least 50 nmol/cm³ is preferable and a concentration of at least 100 nmol/cm³ is most preferred.

In a preferred embodiment of the present discharge lamp, the upper limit of the amount of said halogens is such that the amount of the halogen filling should not exceed 150 % of the amount of halogens required for a complete stoichiometric saturation of the electromagnetic radiation emitting component in the discharge vessel, whilst the amount preferably does not exceed 110 % thereof. With a greater amount of halogens, there arises the risk of the halogens combining with the electrode material, preferably wolfram, resulting in corrosion of the same with a shortened life span of the lamp as a result.

The discharge vessel may further contain mercury vapour in order to regulate the vapour pressure in the lamp. Inert gases such as neon, argon or xenon or any combination thereof are employed to switch on the lamp. The preferred partial pressure of the inert gas(es) during operation ranges from 1 mbar to 1 bar. The preferred pressure is in the range of 3 mbar to 400 mbar. The partial pressure for the inert gas can furthermore be separated into two ranges: one for low pressure lamps, where the preferred partial pressure lies between 1 and 10 mbar, and one for high pressure lamps, where the preferred partial pressure lies between 3 and 400 mbar.

Argon or xenon or any mixture of these inert gases is employed for preference.

The partial pressure of the mercury vapour during operation is preferably between 1 bar and 20 bar and most preferred between 1 bar and 8 bar.

### BRIEF DESCRIPTION OF THE DRAWING

The invention is described more closely in the following with reference to the enclosed drawing, of which
Fig. 1 shows a schematic drawing of a discharge lamp according to the invention.
Fig. 2 shows the wavelength spectrum of a standard UV mercury halogen vapour lamp.

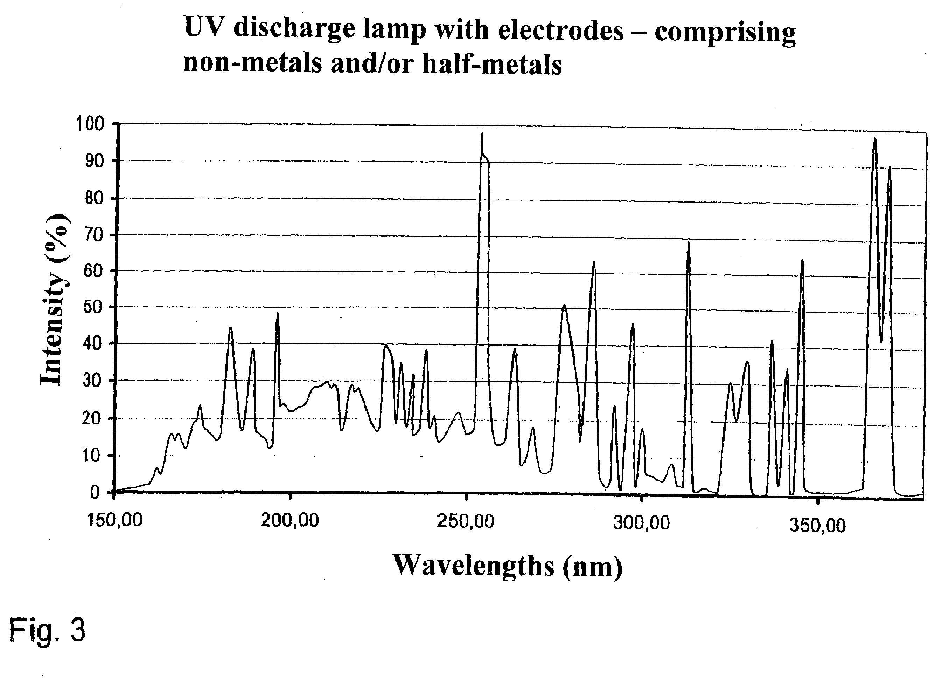

Fig. 3 shows the wavelength spectrum of a discharge lamp with electrodes according to the present invention.

### DETAILED DESCRIPTION OF A PREFERRED EMBODIMENT

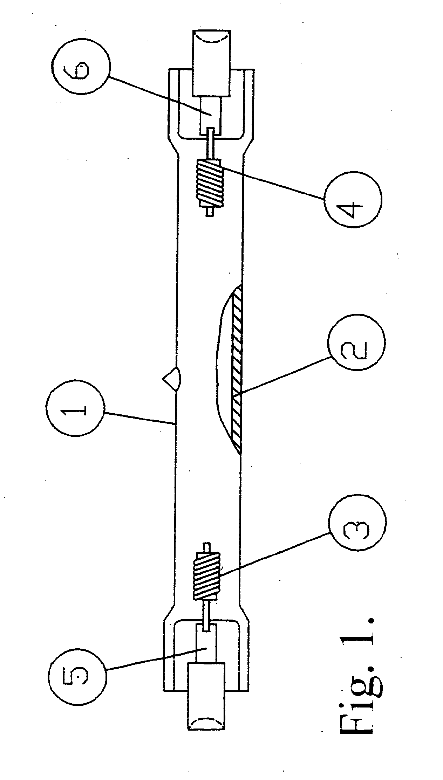

Fig. 1 shows schematically a discharge lamp 1 with a discharge vessel 2, wherein is seen a first current access 5 with a wolfram electrode 3, and a second current access 6 with a wolfram electrode 4. By filling the discharge vessel 2 with a mixture of non-metals and half-metals according to the invention together with mercury, inert gas and a combination of halogens and connecting current to the current access points 5, 6 a plasma arc is formed between the electrodes 3, 4. By adding a combination of halogens to the discharge vessel 2, undesirable wolfram compounds are avoided which would otherwise absorb part of the combination of non-metals and half-metals. In this way greater radiant energy in the spectral area below 300 nm is achieved. A coating of wolfram compounds on the inside of the discharge vessel 2 and corrosion of the electrodes 3, 4 are avoided, thereby avoiding self-destruction of the discharge lamp.

## Claims

1. A discharge lamp including a discharge vessel of an electromagnetic radiation transmitting material and two electrodes extending into the discharge vessel which contains an electromagnetic radiation emitting component consisting of one or more elements selected among arsenic, phosphorus, sulphur, selenium and tellurium, **characterised in that** the discharge vessel further contains one or more halogens so that the radiation of the lamp under normal operation is mainly emitted by the electromagnetic radiation emitting component.

2. A discharge lamp according to claim 1, wherein the electromagnetic radiation emitting component during normal operation of the discharge lamp mainly exists in non-molecular form in the plasma.

3. A discharge lamp according to either of the preceding claims, wherein the energy of the electromagnetic radiation is mainly found as polychromatic radiation at wavelengths below 300 nm.

4. A discharge lamp according to any of the preceding claims, wherein the concentration of said electromagnetic radiation emitting component in the discharge vessel is at least 1 nmol/cm³, and wherein a concentration of at least 50 nmol/cm³ is preferable and a concentration of at least 100 nmol/cm³ is most preferred.

5. A discharge lamp according to any of the preceding claims, wherein the total partial pressure of said electromagnetic radiation emitting component in the discharge vessel during normal operation does not exceed 700 torr (93.3 kPa), and preferably does not exceed 100 torr (13.3 kPa).

6. A discharge lamp according to any of the previous claims, wherein the halogen or halogens include bromine, chlorine or iodine or any combination thereof.

7. A discharge lamp according to any of the previous claims, wherein the concentration of said halogen or halogens amounts to at least 1 nmol/cm³ of the total inner volume of the discharge vessel, and wherein a concentration of at least 50 nmol/cm³ is preferable and a concentration of at least 100 nmol/cm³ is most preferred.

8. A discharge lamp according to any of the previous claims, wherein the amount of the halogen filling does not exceed 150% of the amount of halogens required for a complete stoichiometric saturation of the electromagnetic radiation emitting component in the discharge vessel, whilst the amount preferably does not exceed 110% thereof.

9. A discharge lamp according to any of the previous claims, wherein the electrodes consist of a high temperature metal preferably consisting substantially of wolfram.

10. A discharge lamp according to any of the previous claims, wherein the discharge vessel further contains mercury vapour, where the partial pressure of the said vapour during operation lies between 1 bar and 20 bar and preferably between 1 bar and 8 bar.

11. A discharge lamp according to any of the previous claims, wherein the discharge vessel further contains inert gas, preferably neon, argon, xenon or any mixture of these inert gasses.

12. A discharge lamp according to claim 11, wherein the partial pressure of the inert gas or gases during operation of the lamp lies between 1 mbar and 1 bar, and preferably lies between 3 mbar and 400 mbar.
